# FASCICULE DE BREVET EUROPEEN

(11) **EP 1 409 320 B1**
(45) Date de publication et mention de la délivrance du brevet: **23.12.2009**
(21) Numéro de dépôt: 02760386.9
(22) Date de dépôt: 11.07.2002
(51) Int. Cl.: B60T 17/00, B60T 17/22

(54) **CIRCUIT HYDRAULIQUE DE FREINAGE AVEC MOYENS DE FILTRATION.**
HYDRAULISCHER BREMSKREIS MIT FILTERMITTEL
HYDRAULIC BRAKING CIRCUIT WITH FILTRATION MEANS

(30) Priorité: 13.07.2001 FR 0109448
(43) Date de publication de la demande: 21.04.2004
(73) Titulaire: ROBERT BOSCH GMBH, 70442 Stuttgart (DE)
(72) Inventeur: RICHARD, Philippe, F-77500 Chelles (FR); FOURCADE, Jean, F-77420 Champs Sur Marne (FR)
(74) Mandataire: Hurwic, Aleksander Wiktor
(86) Numéro de dépôt international: PCT/FR2002/002442
(87) Numéro de publication internationale: WO 2003/006296

(56) Documents cités:
- GB-A- 2 040 739
- US-A- 2 959 008
- US-A- 3 357 161
- US-A- 4 062 774

## Description

L'invention concerne un circuit hydraulique de freinage d'un véhicule muni d'une circulation particulière du liquide hydraulique de freinage et son utilisation. L'invention a pour but de garantir la qualité du liquide de frein contenu dans un circuit hydraulique de freinage d'un véhicule par l'intermédiaire d'un circuit particulier.

Lorsqu'un conducteur appuie sur une pédale de frein d'un véhicule, le véhicule est freiné par l'intermédiaire d'un circuit hydraulique de freinage. Plusieurs types de freinage sont connus. On distingue ainsi le freinage simple, le freinage assisté pneumatiquement, et le freinage assisté électriquement. Alors que dans le freinage simple, seule la force du conducteur fait monter la pression dans le circuit hydraulique, avec le freinage assisté, un organe d'assistance prend le relais de cette force dans le but de diminuer la fatigue du conducteur. Dans le cas du freinage assisté électriquement, il peut n'être demandé aucun effort au conducteur. Le circuit hydraulique de freinage fonctionne dans tous les cas par l'intermédiaire du déplacement de la pédale de frein. Notamment dans le cas du freinage assisté électriquement, ce déplacement est analysé par un détecteur de mouvement ou de position, par exemple un potentiomètre. Le détecteur transforme ce déplacement mécanique en une information électrique. Cette information électrique est transmise à un microprocesseur. Le microprocesseur traite l'information électrique pour mettre en marche le moteur d'une pompe hydraulique. Cette pompe hydraulique prélève un liquide de frein contenu dans un réservoir de liquide hydraulique et l'injecte dans un conduit menant à au moins un dispositif de freinage d'une roue du véhicule. La propulsion du liquide de frein dans au moins un conduit permet d'enclencher le freinage du véhicule.

Des désagréments liés à des freinages plus ou moins rapides et/ou liés à l'usure de certains éléments du circuit hydraulique de freinage peuvent survenir. Par exemple, au cours d'un freinage, lorsque la pompe hydraulique se met en marche, le liquide hydraulique est aspiré et subit une montée en pression. Des bulles de gaz peuvent se former dans le liquide hydraulique après cette montée en pression. Le liquide sortant de la pompe peut de ce La demande de brevet US 2 959 008 décrit un dispositif de décarburation et d'épuration d'un circuit hydraulique. fait contenir des bulles de gaz qui le rendent compressible. Cette formation d'une émulsion gazeuse peut rendre le freinage moins efficace.

De plus, le liquide peut également contenir des particules pouvant encombrer les conduits du circuit hydraulique de freinage. Ces particules proviennent le plus souvent de débris métalliques de petite taille ou microscopiques issus du circuit hydraulique de freinage.

Il résulte de cette situation, notamment avec l'apparition des assistances puissantes (électriques en particulier), que le liquide hydraulique peut se dégrader. La solution pour remédier à ce problème serait une purge. Une telle purge régulière ne convient pas aux habitudes et serait de toute façon fastidieuse. Aussi, afin de maintenir la qualité du liquide de frein d'un circuit hydraulique de freinage, l'invèntion prévoit-elle de réaliser un circuit hydraulique particulier. Ce circuit hydraulique particulier est un circuit de nettoyage et de purification du liquide hydraulique. Il peut être monté en parallèle au circuit hydraulique destiné au freinage du véhicule. Ou bien ce circuit hydraulique particulier peut également être monté en série sur le circuit destiné au freinage du véhicule. Ce circuit particulier est de préférence un dispositif de dégazage et de séparation de particules par centrifugation. Ce circuit permet d'éliminer du liquide hydraulique des bulles de gaz et les particules qui pourraient circuler dans le circuit hydraulique de freinage. En pratique, ce circuit particulier du liquide hydraulique est muni d'une chambre de décantation. Cette chambre de décantation possède de préférence un panier perméable, par exemple avec une paroi percée de trous et ayant une forme conique.

La purification est menée de telle manière que le liquide est propulsé par l'intermédiaire d'une pompe hydraulique à l'intérieur du panier perméable. Le dispositif fonctionne également de telle manière que le liquide à l'entrée de la chambre de décantation réalise un cyclone. Ce cyclone permet de projeter vers l'extérieur notamment vers l'extérieur du panier, par centrifugation, les particules contenues dans le liquide hydraulique. Les particules lourdes sont préférentiellement éliminées par décantation. Les bulles de gaz se concentrent au contraire au centre de la chambre et, lors de l'arrêt du dispositif ou en cours d'utilisation, les bulles sont définitivement piégées à la partie supérieure de la chambre. Ce liquide, débarrassé des particules lourdes et des bulles de gaz, est renvoyé dans le réservoir et/ou dans le circuit hydraulique destiné au freinage du véhicule. Ce dispositif permet, dans le circuit hydraulique de freinage, la réutilisation permanente du même liquide de freinage pour les freinages suivants. De préférence, ce dispositif se met en marche par une routine fonctionnant à l'arrêt définitif du véhicule. La chambre est située dans un endroit le plus haut dans le circuit hydraulique de freinage.

L'invention a donc pour objet un circuit hydraulique de freinage d'un véhicule comportant
- un récipient contenant un liquide hydraulique de freinage,
- des moyens pour faire circuler le liquide de freinage entre le récipient et des moyens de freinage, caractérisé en ce que
- ces moyens pour faire circuler le liquide de freinage comportent des moyens pour éliminer des particules lourdes et des bulles de gaz du liquide de frein.
   La présente invention a également pour objet un circuit hydraulique de freinage d'un véhicule comportant
- un récipient contenant un liquide hydraulique de freinage,
- des moyens pour faire circuler le liquide de freinage entre le récipient et des moyens de freinage,
- ces moyens pour faire circuler le liquide de freinage comportant des moyens pour éliminer des particules lourdes et des bulles de gaz du liquide de frein caractérisé en ce que les moyens pour faire circuler le liquide hydraulique comportent une chambre cylindrique circulaire verticale munie d'une entrée supérieure et d'une sortie inférieure de liquide hydraulique.

L'invention a également pour objet l'utilisation d'un circuit hydraulique de freinage d'un véhicule caractérisé en ce qu'il comporte les étapes suivantes:
- on arrête le moteur du véhicule,
- on met en service un circuit de purification du liquide hydraulique après cet arrêt du moteur, ce circuit de purification faisant partie du circuit hydraulique de freinage.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : selon l'invention, une représentation schématique d'un circuit hydraulique de freinage muni d'un dispositif de dégazage et de séparation de particules par centrifugation.
- Figure 2 : un diagramme temporel montrant l'utilisation du circuit hydraulique de l'invention.

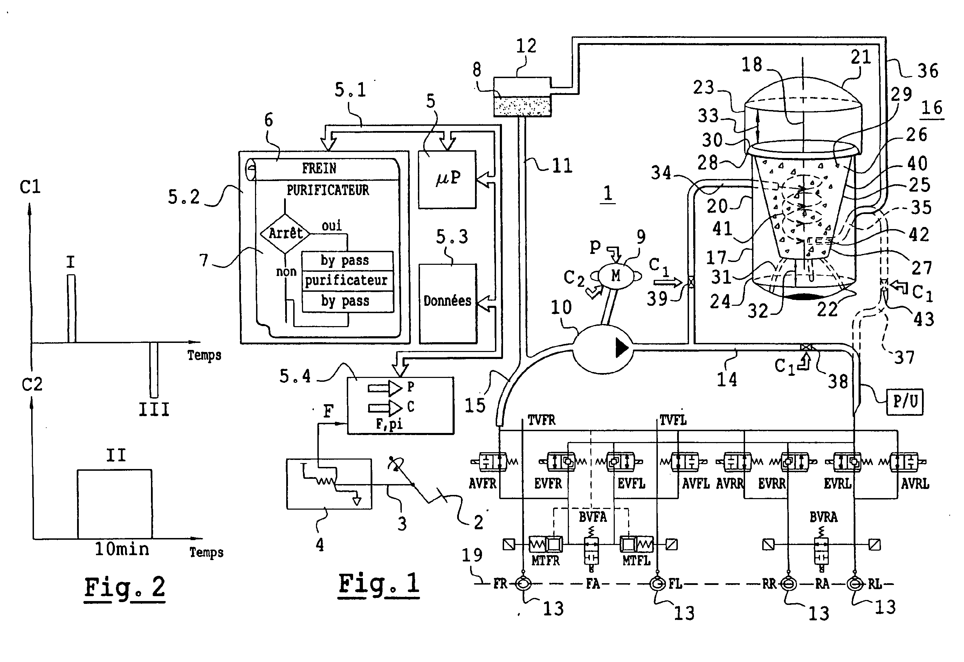

La figure 1 montre un circuit hydraulique de freinage 1. Ce circuit hydraulique de freinage 1 est ici actionnée par une pédale 2 de frein reliée par une tige de commande 3 à un potentiomètre 4. Le potentiomètre 4 est par exemple un appareil de mesure et de transformation du mouvement de la pédale de frein en un signal électrique. Ce signal électrique est transmis à un microprocesseur 5 auquel le potentiomètre 4 est relié par un bus 5.1. Le microprocesseur 5 est aussi en relation avec une mémoire programme 5.2, une mémoire de données 5.3 et une interface d'échange 5.4. Le microprocesseur 5 exécute un programme 6 mémorisé dans la mémoire 5.2 et aboutissant au freinage du véhicule. Un ordre de freinage émis par le microprocesseur 5 est aussi élaboré sous la forme d'une commande P disponible dans l'interface 5.4.

Selon l'invention, le microprocesseur 5 peut aussi exécuter un programme 7 aboutissant à une purification d'un liquide de frein 8. Cette purification est lancée par une commande C. Par cette commande C, en pratique par les ordres C1 et C2, le microprocesseur 5 commande un moteur 9 d'une pompe hydraulique 10. Cette commande C est appliquée au moteur 9 par exemple en remplacement de la commande P si la même pompe sert pour l'assistance de freinage (commande P) et la purification (commande C).

Lorsqu'un conducteur appuie sur la pédale 2 de frein, le potentiomètre 4 transforme le déplacement de la tige 3 de la pédale 2 de frein en un signal électrique. Ce signal électrique est transmis au microprocesseur 5. En fonction de la valeur de ce signal, le microprocesseur 5 envoie un signal P correspondant de mise en marche du moteur 9 de la pompe hydraulique 10. La pompe hydraulique 10 aspire le liquide 8 contenu dans le réservoir 12 par le conduit 11. Le liquide 8 subit une montée en pression dans la pompe 10 et est distribuée par le conduit 14 à au moins un dispositif de freinage d'une roue 13 du véhicule. Cette distribution déclenche le freinage. Après le freinage, le liquide hydraulique 8 peut retourner vers la pompe hydraulique 10 par le conduit 14, ou peut stagner dans le circuit hydraulique de freinage
1. Le liquide 8 peut également retourner au réservoir 12 et/ou à la pompe hydraulique 10 par un conduit 15.

Selon l'invention, sur ce circuit 1 destiné au freinage du véhicule, un dispositif 16 de purification peut être monté en série ou en parallèle. Monté en série, ce dispositif 16 de purification peut être intégré dans le réservoir de liquide de frein 8. Le liquide de frein passerait par ce dispositif avant de retourner au réservoir. Dans un exemple, ce dispositif 16 de purification est monté en parallèle sur le circuit 1 destiné au freinage du véhicule, figure 1.

Ce dispositif 16 de purification peut comporter notamment un dégazage et/ou une séparation des particules par centrifugation. Ce dispositif 16 est un circuit hydraulique particulier comportant une chambre de décantation 17. Cette chambre de décantation 17 est un des moyens pour éliminer les particules lourdes et les bulles de gaz du liquide de frein. Cette chambre de décantation 17 est un récipient cylindrique circulaire vertical, de forme allongée. Il possède en son centre un axe 18 perpendiculaire à un plan 19 défini par quatre roues 13 du véhicule. De préférence, la paroi 20 de cette chambre de décantation est terminée par deux demi-calottes sphériques 21 et 22, respectivement supérieure et inférieure. Cette chambre de décantation 17 est située à l'endroit le plus haut du circuit hydraulique 1. La chambre de décantation 17 possède une partie haute 23 située du côté de la demi-calotte sphérique 21 et une partie basse 24 située du côté de la demi-calotte sphérique 22.

A l'intérieur de cette chambre de décantation 17 est disposé un panier 25, dans un exemple de forme conique. Ce panier 25 possède une partie supérieure 26 de plus grand diamètre et une partie inférieure 27 de plus petit diamètre. Le panier 25 est présent par sa partie 26 de plus grand diamètre dans la partie haute 23 de la chambre de décantation 17. Ce panier 25 est perméable. Il comporte une paroi 28 par exemple munie de trous 29. Dans le cas où le panier est percé, les trous 29 ont la particularité de laisser passer des particules lourdes pouvant être présentes dans le liquide hydraulique 8. Ces particules peuvent encombrer les conduits du circuit hydraulique de freinage 1 comme par exemple les conduits 11, 14 ou 15.

Le panier 25 a la particularité d'être suspendu dans la chambre de décantation 17. Le panier 25 peut être, par exemple suspendu par l'intermédiaire de rebords volumineux formant un bourrelet 30 extérieur et circulaire. Ce bourrelet 30 peut être présent dans la partie 26 de plus grand diamètre du panier 25. Ce bourrelet 30 peut alors s'encastrer dans une extension 28 de la partie haute 23 de la chambre de décantation 17. Ce panier 25 peut également être suspendu à l'aide de pieds 31. Ces pieds 31 peuvent être des tiges rigides fixées au fond de la demi-calotte sphérique 22 dans la partie basse 24 de la chambre de décantation 17. Ces tiges permettent de poser le panier 25 percé par sa partie de plus petit diamètre. La partie 26 de plus grand diamètre de ce panier 25 est situé à une altitude légèrement inférieure à celle du sommet de la chambre de décantation 17.

Cette disposition générale permet de disposer d'un espace 32 en dessous du panier 25, dans la partie basse 24 de la chambre de décantation 17, et d'un espace 33 au-dessus du panier 25, dans la partie haute 23 de la chambre de décantation 17. Ces espaces servent de réservoir des impuretés résultant de la purification du liquide 8.

La chambre de décantation 17 est reliée au circuit hydraulique 1 par un conduit d'entrée 34 et un conduit de sortie 35. Le conduit d'entrée 34 est directement relié à la pompe hydraulique 10. Le conduit de sortie 35 peut être relié au réservoir de liquide hydraulique 12 par un conduit 36 et/ou au circuit hydraulique 1 destiné au freinage du véhicule par un conduit 37. Les deux conduits d'entrée 34 et de sortie 35 pénètrent à travers la chambre de décantation 17 et de préférence débouchent dans le panier 25. Le conduit d'entrée 34 pénètre à travers la chambre de décantation 17 dans sa partie haute 23 et débouche dans le panier 25 dans sa partie de plus grand diamètre 26. Le conduit de sortie 36 naît dans la partie 27 de plus petit diamètre du panier 25 et sort par la partie 24 basse de la chambre de décantation 17.

Ce dispositif 16 de dégazage et de séparation des particules est mis en marche par une routine ou sous-programme 7 fonctionnant, selon l'invention de préférence à l'arrêt du véhicule. A l'arrêt du véhicule, un signal émis par le microprocesseur 5 déclenche le programme de purification 7. Dans ce but, le programme 7 comporte une surveillance permanente de l'arrêt du moteur du véhicule. Eventuellement, une temporisation, par exemple de 10 minutes, lance avec retard le programme de purification. Ce programme de purification se décompose en trois phases I, II et III montrées sur la figure 2. Ces trois phases forment le fonctionnement à vide de l'invention. Par fonctionnement à vide on entend ainsi un fonctionnement du circuit hydraulique qui n'a pas pour but de provoquer de freinage.

La première phase I coure consiste à ouvrir et fermer des vannes d'isolement sur le circuit hydraulique. La deuxième phase II plus longue consiste à purifier le liquide hydraulique. La troisième phase III de même durée que la première consiste à fermer et ouvrir dans le sens inverse les vannes précédemment ouvertes et fermées lors de la première phase. Les phases I et III sont déclenchées par une commande C1. La phase II est déclenchée par une commande C2 à titre de commande C.

Ainsi, dans le cas où le dispositif 16 est déconnecté du circuit 1 pendant la marche du véhicule, la première phase I du programme de purification 7 débute par la commande C1. La commande C1 entraîne la fermeture d'une première vanne 38 située dans le conduit 14 du circuit hydraulique 1 destiné au freinage. La première phase du programme de purification 7 se poursuit par l'ouverture d'une autre vanne 39 située dans le conduit d'entrée 34 de la chambre de décantation 17, au même moment ou légèrement après la fermeture de la première vanne 38. Puis le microprocesseur 5 déclenche la deuxième phase II de purification par une commande C2 du signal de mise en marche du moteur 9 de la pompe 10 hydraulique. Ainsi le liquide hydraulique 8 contenus dans le réservoir hydraulique 12 est aspiré par la pompe hydraulique 10. Le liquide 8 se dirige ensuite vers la chambre de décantation 17 par le conduit 34 pour la purification et retourne vers le réservoir 12 par les conduits 35 et 36.

En variante, un conduit 37 pourrait relier la sortie 35 de la chambre de décantation 17 au circuit hydraulique de freinage 1. Après la fermeture de la première vanne 38, la phase I se poursuivrait alors par l'ouverture de la vanne 39 et d'une autre vanne 43 disposée dans le conduit 37. En utilisant le conduit 37, le liquide 8 contenu dans au moins un circuit de distribution d'une roue 13 du circuit hydraulique 1 de freinage peut être purgé par la chambre 17. De plus, le liquide 8 présent dans le conduit de sortie 35 s'écoulerait d'une part vers le réservoir 12 de liquide hydraulique 8 via le conduit 36 et d'autre part vers le circuit 1 destiné au freinage via le conduit 37.

Selon l'invention, le liquide 8 sortant de la pompe hydraulique 10 se dirige ensuite dans le conduit d'entrée 34 de la chambre de décantation 17. Sous l'effet de la pression exercée par la pompe hydraulique 10, le liquide 8 est propulsé dans le panier 25 de la chambre de décantation 17 par l'intermédiaire du conduit d'entrée 34. Le conduit d'entrée 34 entre dans la chambre de décantation 17 et dans le panier 25 de telle manière que le liquide qui en sort réalise un cyclone 41, notamment un cyclone à l'intérieur du panier 25. Le cyclone 41 est également un des moyens pour éliminer les particules lourdes et les bulles de gaz du liquide de frein 8. Dans ce but, ces deux conduits 34 et 35 sont disposés tangentiellement à la paroi 40 du panier 25. Par exemple, concernant le conduit d'entrée 34, il pénètre et débouche à l'intérieur du panier 25 de manière à longer la paroi à l'intérieur du panier 25. Le cyclone 41 est une centrifugation artificielle permettant d'expulser vers l'extérieur du panier 25 les particules lourdes pouvant être présentes dans le liquide hydraulique 8 et de concentrer vers l'axe 18 de la chambre de décantation 17 les particules plus légères, par exemple des particules gazeuses.

Le liquide 8 est ensuite récupéré dans la partie 27 de plus petit diamètre du panier 25 par le conduit de sortie 35. Concernant les particules lourdes, elles peuvent passer à travers au moins un trou 29 du panier 25. Du fait de la pesanteur et de l'espace 32 disponible en dessous du panier 25, les particules lourdes vont pouvoir s'accumuler au fond de la chambre de décantation 17 à la surface de la demi-calotte sphérique 22. Concernant les particules légères pouvant être présentes dans le liquide hydraulique 8, elles sont concentrées vers l'axe 18 de la chambre de décantation 17 lors de la centrifugation. Ces particules légères peuvent être des bulles de gaz qui résultent de la mise en pression du liquide hydraulique 8 et de phases ultérieures de détente. Ces bulles de gaz sont ensuite éliminées à l'arrêt du fonctionnement du dispositif 16 de dégazage. En effet, à l'arrêt du dispositif 16, les bulles de gaz s'évacuent dans la partie haute 23 de la chambre de décantation 17 réservé à cet effet et sont définitivement piégées.

En variante, les particules légères restant dans le liquide 8 peuvent être absorbées grâce à un filtre 42 déposé à l'intérieur du conduit 36 de sortie de la chambre de décantation 17.

Si on ne met pas de panier 25, le phénomène se produit quand même, avec cependant un résultat moins performant. On pourrait par ailleurs se passer du cyclone et donc des entrées tangentielles. Dans ce cas, des turbulences dans la chambre 17 conduiraient au même résultat : les particules lourdes se placeraient préférentiellement à un endroit et les particules légères à un autre. Il suffirait de les y collecter.

Une fois que la durée programmée pour la purification est écoulée, la troisième phase III est déclenchée par le microprocesseur 5. Cette phase consiste à ouvrir la vanne 38 et à fermer les vannes 39 et 43 pour rétablir le circuit hydraulique 1 dans cet état destiné au freinage du véhicule.

Cependant, ces vannes d'isolement 38, 39 et 43 peuvent être facultatives. Le dispositif 16 fonctionnerait également si il était connecté en permanence au circuit et en particulier au réservoir à l'endroit où se situe le retour du liquide de frein. Dans ce cas, le programme de purification 7 comporterait qu'une seule phase II.

## Revendications

1. - Circuit hydraulique (1) de freinage d'un véhicule comportant
- un récipient (12) contenant un liquide hydraulique (8) de freinage,
- des moyens pour faire circuler le liquide de freinage entre le récipient et des moyens de freinage,
- ces moyens pour faire circuler le liquide de freinage comportant des moyens pour éliminer des particules lourdes et des bulles de gaz du liquide de frein (8) **caractérisé en ce que** les moyens pour faire circuler le liquide hydraulique (8) comportent une chambre (17) cylindrique circulaire verticale munie d'une entrée supérieure (34) et d'une sortie inférieure (35) de liquide hydraulique (8).

2. - Circuit (1) selon la revendication 1, **caractérisé en ce que** les moyens pour éliminer des particules lourdes et des bulles de gaz du liquide de frein (8) comportent des moyens pour faire circuler à vide le liquide de frein.

3. - Circuit (1) selon la revendication 1, **caractérisé en ce que** les moyens pour éliminer des particules lourdes et des bulles de gaz du liquide de frein (8) comportent des moyens pour faire circuler le liquide après un arrêt du moteur du véhicule.

4. - Circuit (1) selon l'une des revendications 1 à 3, **caractérisé en ce que** les moyens pour faire circuler le liquide hydraulique comportent des moyens pour produire un cyclone (41) dans le fluide hydraulique (8).

5. - Circuit (1) selon l'une quelconque des revendications précédentes, **caractérisé en ce que** l'entrée (34) et ou la sortie (35) de liquide hydraulique de la chambre (17) sont placées tangentiellement à celle-ci.

6. - Circuit (1) selon l'une quelconque des revendications précédentes, **caractérisé en ce que** les moyens pour faire circuler le liquide hydraulique comportent un séparateur de particules monté dans la chambre cylindrique.

7. - Circuit (1) selon la revendication 6, **caractérisé en ce que** le séparateur de particules comporte un panier (25) perméable recevant l'entrée et la sortie de liquide hydraulique.

8. - Circuit (1) selon la revendication 7, **caractérisé en ce que** les moyens pour faire circuler le liquide hydraulique comportent des moyens pour élever le fond du panier (25) au-dessus du fond de la chambre (17).

9. - Circuit (1) selon l'une des revendications 7 à 8, **caractérisé en ce que** les moyens pour faire circuler le liquide hydraulique comportent des moyens pour libérer un espace (33) au-dessus de l'entrée (34) de fluide hydraulique.

10. - Circuit (1) selon l'une quelconque des revendications précédentes, **caractérisé en ce que** la chambre (17) est située à un endroit le plus haut par rapport au circuit (1) hydraulique de freinage.

11. - Circuit (1) selon l'une quelconque des revendications précédentes **caractérisé en ce que** la sortie (35) de liquide hydraulique de la chambre de décantation (17) comporte un filtre (42) permettant d'absorber certaines particules pouvant être présentes dans le liquide hydraulique (8).

## Claims

1. Hydraulic braking circuit (1) for a motor vehicle, comprising :
- a tank (12) containing a hydraulic brake fluid (8),
- means for circulating the brake fluid, between the tank and braking means,
- said means for circulating the brake fluid comprising means for removing heavy particles and gas bubbles from the brake fluid (8), **characterised in that** said means for circulating the hydraulic brake fluid (8) comprise a vertical, circular-cylindrical chamber (17), fitted with a top inlet (34) and a bottom outlet (35) for the hydraulic fluid (8).

2. Circuit (1) according to claim 1,
**characterised in that** said means for removing heavy particles and gas bubbles from the brake fluid (8) comprise means for the no-load circulating of the brake fluid.

3. Circuit (1) according to claim 1,
**characterised in that** said means for removing heavy particles and gas bubbles from the brake fluid (8) comprise means for the circulating of the brake fluid, once the vehicle engine is switched off.

4. Circuit (1) according to one of claims 1 to 3, **characterised in that** said means for the circulating of the hydraulic brake fluid comprise means for the generation of a cyclone (41) in the hydraulic fluid (8).

5. Circuit (1) according to any one of the preceding claims, **characterised in that** the hydraulic-fluid inlet (34) and/or outlet (35) of the chamber (17) is/are disposed tangentially to the latter.

6. Circuit (1) according to any one of the preceding claims, **characterised in that** said means for the circulating of the hydraulic brake fluid comprise a particle separator, installed inside the cylindrical chamber.

7. Circuit (1) according to claim 6,
**characterised in that** the particle separator comprises a pervious basket (25) in which the hydraulic-fluid inlet and outlet are located.

8. Circuit (1) according to claim 7,
**characterised in that** said means for the circulating of the hydraulic fluid comprise means for setting the bottom of the basket (25) at a higher level than the bottom of the chamber (17).

9. Circuit (1) according to claim 7 or claim 8, **characterised in that** said means for the circulating of the hydraulic fluid comprise means for providing a space (33) above the hydraulic-fluid inlet (34).

10. Circuit (1) according to any one of the preceding claims, **characterised in that** the chamber (17) is situated in the highest possible location relative to the hydraulic braking circuit (1).

11. Circuit (1) according to any one of the preceding claims, **characterised in that** the hydraulic-fluid outlet (35) of the decantation chamber (17) comprises a filter (42) for the absorption of certain particles, likely to be held in the hydraulic fluid (8).

## Patentansprüche

1. Hydraulischer Bremskreis (1) eines Fahrzeugs, mit
- einem Behälter (12), der eine hydraulische Bremsflüssigkeit (8) enthält,
- Mitteln, um die Bremsflüssigkeit zwischen dem Behälter und Bremsmitteln zirkulieren zu lassen,
- wobei diese Mittel für die Zirkulation der Bremsflüssigkeit Mittel zur Eliminierung von schweren Partikeln und Gasbläschen aus der Bremsflüssigkeit (8) aufweisen, **dadurch gekennzeichnet, dass** die Mittel für die Zirkulation der Hydraulikflüssigkeit (8) eine senkrechte, kreisförmige, zylindrische Kammer (17) aufweisen, die mit einem oberen Eintritt (34) und einem unteren Austritt (35) für Hydraulikflüssigkeit (8) versehen ist.

2. Kreis (1) nach Anspruch 1, **dadurch gekennzeichnet, dass** die Mittel zur Eliminierung von schweren Partikeln und Gasbläschen aus der Bremsflüssigkeit (8) Mittel für die Zirkulation der Bremsflüssigkeit im Unterdruck aufweisen.

3. Kreis (1) nach Anspruch 1, **dadurch gekennzeichnet, dass** die Mittel zur Eliminierung von schweren Partikeln und Gasbläschen aus der Bremsflüssigkeit (8) Mittel für die Zirkulation der Flüssigkeit nach einem Abschalten des Fahrzeugmotors aufweisen.

4. Kreis (1) nach einem der Ansprüche 1 bis 3, **dadurch gekennzeichnet, dass** die Mittel für die Zirkulation der Hydraulikflüssigkeit Mittel zur Erzeugung eines Wirbelstroms (41) in der Hydraulikflüssigkeit (8) aufweisen.

5. Kreis (1) nach einem der vorhergehenden Ansprüche, **dadurch gekennzeichnet, dass** der Hydraulikflüssigkeitseintritt (34) und/oder der Hydraulikflüssigkeitsaustritt (35) der Kammer (17) tangential zu dieser angeordnet sind.

6. Kreis (1) nach einem der vorhergehenden Ansprüche, **dadurch gekennzeichnet, dass** die Mittel für die Zirkulation der Hydraulikflüssigkeit einen in der zylindrischen Kammer angebrachten Partikelabscheider aufweisen.

7. Kreis (1) nach Anspruch 6, **dadurch gekennzeichnet, dass** der Partikelabscheider einen durchlässigen Korb (25) aufweist, in den der Hydraulikflüssigkeitseintritt und der Hydraulikflüssigkeitsaustritt münden.

8. Kreis (1) nach Anspruch 7, **dadurch gekennzeichnet, dass** die Mittel für die Zirkulation der Hydraulikflüssigkeit Mittel zum Anheben des Bodens des Korbs (25) über den Boden der Kammer (17) aufweisen.

9. Kreis (1) nach einem der Ansprüche 7 bis 8, **dadurch gekennzeichnet, dass** die Mittel für die Zirkulation der Hydraulikflüssigkeit Mittel aufweisen, um einen Raum (33) über dem Hydraulikflüssigkeitseintritt (34) freizugeben.

10. Kreis (1) nach einem der vorhergehenden Ansprüche, **dadurch gekennzeichnet, dass** die Kammer (17) an einer in Bezug auf den hydraulischen Bremskreis (1) höchsten Stelle angeordnet ist.

11. Kreis (1) nach einem der vorhergehenden Ansprüche, **dadurch gekennzeichnet, dass** der Hydraulikflüssigkeitsaustritt (35) der Absetzkammer (17) einen Filter (42) aufweist, der die Aufnahme bestimmter Partikel ermöglicht, die in der Hydraulikflüssigkeit (8) vorhanden sein können.
